# EUROPEAN PATENT SPECIFICATION

(11) **EP 2 174 702 B1**
(45) Date of publication and mention of the grant of the patent: **28.03.2012**
(21) Application number: 08425663.5
(22) Date of filing: 13.10.2008
(51) Int. Cl.: B01D 61/12, G01N 27/10

(54) **Monitoring the operation of fluid treating systems**
Überwachung des Betriebs von Flüssigkeitsbehandlungssystemen
Surveillance du fonctionnement de systèmes de traitement de fluides

(43) Date of publication of application: 14.04.2010
(73) Proprietor: Membrane S.r.l., 20146 Milano (IT)
(72) Inventor: Arcari, Matteo, 20146 Milano (IT); Arcari, Vittorio, 20146 Milano (IT)
(74) Representative: Borsano, Corrado

(56) References cited:
- EP-A- 1 202 078
- DE-C- 970 717
- US-A1- 2007 140 902
- US-A1- 2007 209 977
- US-A1- 2008 052 012
- US-A1- 2008 164 209

## Description

### Field of application of the invention

The present invention relates to detecting faults in fluid treating systems which operate according to the general principle of filtration using membranes.

### State of the art

Membrane filtration is a technique generally employed for purifying fluids. This technique may be adopted for purifying process fluids, e.g. solutions (aqueous-based or organic solvent-based) used in chemical or pharmaceutical plants, or for purifying water, e.g. for making drinking water from salty water.

Various filtering types are distinguished in the field according to the approximate size of the particles which may be removed from the fluid by means of the specific technique. Microfiltration is able to remove particles of size larger than approximately 0.1 micrometers (µm); ultrafiltration removes particles of molecular or colloidal size, i.e. down to sizes in the order of 10 nanometers (nm); nanofiltration removes species down to the size of bivalent ions; finally, reverse osmosis removes species down to the size of monovalent ions, such as sodium or potassium ions (of size approximately smaller than 1 nanometer).

The most common application is the production of purified water for industrial applications or for supplying drinking water to off-shore systems (e.g. oil rigs) or to geographic areas in which the availability of such a resource is limited, as desert areas or islands without water basins. In the rest of the description, reference will thus be made to this application and to water desalination systems.

The indicator of water salinity degree most commonly used in the field is its specific conductivity, measured in microSiemens per centimeter (µS/cm). In the rest of the text and in the claims, reference will always be made to conductivity measurements; in practice, the magnitude actually measured by means of known methods is the specific resistivity, which is transformed into specific conductivity simply by calculating the reciprocal value thereof. Desalination systems are normally fed either with waters of various salt contents, which typically have a conductivity in the order of several tens, hundreds or thousands of µS/cm, or with seawater, with conductivity values in the order of some tens of thousands of µS/cm. The water produced by the system may be desalinated to various degrees; although the definitions of waters of different degrees of purity are not severe, approximately the water output from the system may be defined as drinkable when its conductivity values are not higher than 1,000 µS/cm and preferably lower than approximately 700 µS/cm, distilled or demineralized with values lower than about 20 µS/cm, and pure (for use in chemical processes) with values lower than about 0.1 µS/cm.

The functional element in these systems is a wall permeable to water but not to the species dissolved therein, such as salts or organic molecules; in the rest of the description and in the claims, a wall with these features will be named "semi-permeable". As known, if two aqueous solutions with different concentration are separated by a semi-permeable wall, a spontaneous migration of the water from the more diluted solution to the more concentrated one occurs, which results in an increase of the hydrostatic pressure of the latter; the pressure difference which is established between the two solutions when the phenomenon is balanced is named "osmotic pressure". If a pressure higher than osmotic pressure is applied from the outside (e.g. by means of mechanical pumps) to the more concentrated solution, the migration of water is forced in a direction opposite to the spontaneous direction. The process is defined "reverse osmosis", and results on one hand in the further concentration of the initially more concentrated solution, and on the other hand in the further dilution of the initially more diluted solution or in the production of a flow of pure water. The pressure to be applied to the concentrated solution for the phenomenon to occur depends on the difference of salinity between the two solutions on the opposite faces of the wall: in practice, for the process to occur at acceptable speed and efficiency, the pressure to be applied for the purification of briny water is in the range of approximately 20 - 40 bars, while for seawater it is in the range of approximately 60 - 80 bars.

In the practical embodiment thereof, industrial desalination systems have a modular construction and are generally formed by desalination units, named "vessels" in the field, reciprocally connected in parallel in the system.

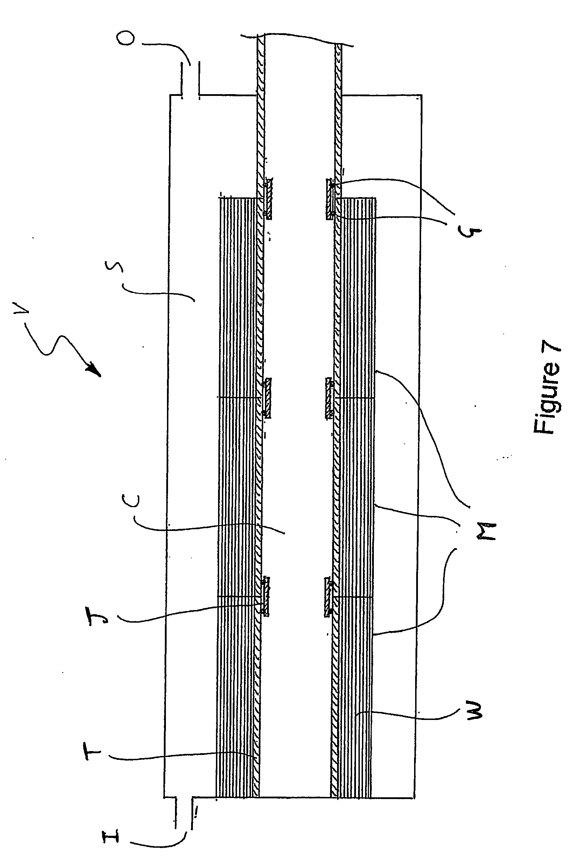

Figure 7 schematically shows a section view of a vessel: in the drawing, the dimensional relationships between the elements of the vessel have been altered for a better understanding of the same, and in particular the diameter of the internal pipe in which purified water flows is greatly exaggerated. The vessel V generally consists of a steel or plastic material tube which has at one end an inlet I for the water to be purified, named "feedwater" in the field, and at the opposite end an outlet O for discharging the waste water of the process, named "concentrate" in the field. Modules M, which are the functional elements of the system are contained inside the vessel (three of such modules are shown in the drawing, but actual vessels generally contain from four to eight modules); each module is formed by a semi-permeable membrane W which surrounds a tube T of porous polymeric material; although various types of membranes exist, for example those known in the field as "capillary membranes", the by far most common configuration is that in which the membrane is a sheet of polymeric material spirally wound about the tube T; in the rest of the description reference will mainly be made to this type of modules. Modules of various type are commercially available and sold, for example, by Dow Chemicals under the tradename Filmtec or by Toray Industries. The modules are connected to each other by means of joints J inserted for a short segment into the ends of the tube T; gaskets G (typically O-rings), which form a seal against the internal surface of the tube T, are present on the external or face surface of the joints. The coupling of the tubes T forms a pipe C, closed at one end, generally on the side of inlet I of the vessel, and is connected at the opposite end to a tubing for outputting the desalinated water from the vessel. In the figure, the closure of the pipe C is schematically show in that the end of a module is in contact with the wall of the vessel, but this condition may be obtained more in general by any non-permeable element capable of forming a seal against the tube T; the part of the pipe C which protrudes from the vessel, and which is not surrounded by the membrane W, is made of a non-permeable material; other constructions are however possible, provided the condition is respected that only the parts of tube T surrounded by membrane W be permeable, while the parts directly exposed to the feedwater must be impermeable thereto.

A chamber S is defined between the modules and the internal wall of the vessel, in which the pressurized feedwater is present; the feedwater crosses the membrane parallelly to the axis of the module M, tangentially following the various layers of the winding. In the radial motion component (determined by the imposed pressure), the membrane withholds the salts, so that desalinated water, named "permeate" in the field (which term will be adopted hereinafter in the text and in the claims), comes to flow in the inner tube.

In the desalination system, the vessels are reciprocally connected in parallel, in groups of several tens, to water inlet and outlet tubings, to form vessel arrays, as they are named in the field. The connection of each single vessel to the feedwater inlet line and to the outlet lines of the concentrate and the permeate is normally established by means of couplings of various nature normally present on the market. The arrays are, in turn, reciprocally connected in parallel and/or in series to the main feedwater inlet line and to the concentrate and permeate outlet lines.

A complete reverse osmosis desalination system may thus consist of the coupling of thousand modules of the M type reciprocally connected by means of joints and gaskets, or even several tens of thousands of such modules in the case of larger systems (in addition to other components, such as for example pumps and filters upstream of the arrays, the first for bringing inlet water at the pressure values required for the system operation, the second for removing solid particles in the inlet water which might damage the membranes).

The main problem of these systems is the possible breakage of a membrane or of a gasket, which may occur by wear due to the pressures and the chemically aggressive environment to which these elements are exposed, or the simple performance decrease of the membranes due to different chemical and physical causes. A breakage or crack produced on a membrane or a gasket represent points at which the saline solution in the chamber S may pass (promoted by the high pressure difference) into the pipe C without being subjected to the phenomenon of reverse osmosis, and thus without separation of the salts from water; the flow rate of non-desalinated water at these points is furthermore sufficiently high (the larger the breakage or crack of the membrane or gasket, the higher the flow rate) so that even a single fault in a single membrane or gasket may compromise the quality of the water outlet from the system, making it unusable for the intended usage in the worst cases. Chemical damages cause similar effects as they deteriorate (even only partially) the surface of the membrane by locally affecting its performance. Such damages may be of reversible or irreversible type: typically, a performance worsening of more than 10% qualify the damage as irreversible.

As mentioned, the quality of the water produced by these systems is monitored by measuring its electric conductivity downstream the system. At the current state of the art, when it is detected that this value exceeds an acceptable maximum value (according to the intended use of the water), localized conductivity measurements are needed to identify the vessel in which the breakage occurred. The vessel is then checked by opening the permeate outlet and inserting a probe tube into the pipe C, so that at first one end thereof reaches the bottom of the pipe C, while water samples for measuring conductivity are taken from the other, open end; by slowly withdrawing the probe tube from said pipe and measuring the conductivity of the water taken at various points of the same it is possible to determine the point in which the conductivity sharply rises, which corresponds to the point in which the breakage of the membrane or gasket occurred. This process is long and laborious and further implies the release of large amounts of water in the monitored area of the system.

Patent application US 2007/0209977 A1 describes a multi-parameter reading device, for reading several different physical parameters of the fluid in a vessel at the same time.

### Summary of the invention

It is the object of the present invention to continuously monitor the correct operation of each vessel in a water treating system based on filtration by means of membranes, with particular reference to water desalination systems using the principle of reverse osmosis.

A further object of the invention is to automate said system, so that the monitoring may be performed in a continuous cycle and so that it is possible to record the part of the system which undergoes a damage, establishing whether the damage is irreversible or reversible, and the time when such a damage occurred.

These and other objects are achieved by means of the present invention, as defined in claims 1 and 15.

### Brief description of the drawings

The invention will be described in detail below with reference to the drawings, in which:
- Fig. 1 schematically shows a section view of a vessel of the invention including a device for monitoring the operation of the same;
- Fig. 2 shows a section view of a detail of the device shown in fig. 1;
- Figures 3, 4 and 5 show pattern curves of the electric conductivity values during the measurement;
- Fig. 6 depicts a logic flow chart of the software for analysing and monitoring the behaviour of the system;
- Fig. 7, already described in the introduction, schematically shows a section view of a known vessel for purifying water by means of reverse osmosis.

### Detailed description of the embodiments

The invention is particularly applied for monitoring the quality of purified water produced by a desalination system based on reverse osmosis membranes. Reference will be made to this application in the rest of the description.

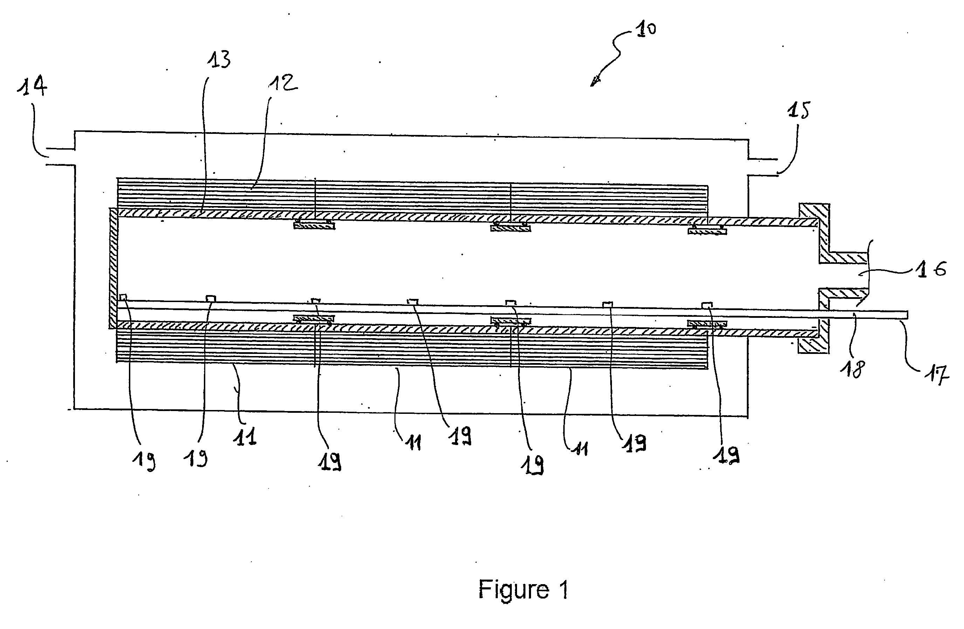

The device consists of 2n+1 electric conductivity sensors, in which n is the number of reverse osmosis modules present in the vessel. This embodiment is schematically shown in section view in figure 1: for illustrating convenience, the elements in the drawing are not in scale, and in particular the diameter of the permeate pipe is greatly exaggerated; as an example, in the figure, a wound spiral configuration membrane was chosen; furthermore, the figure shows a vessel containing only three reverse osmosis modules, but in practical embodiments a vessel typically contains from four to eight modules.

In vessel 10 there are three modules 11 of known type, each of which is formed by a membrane 12 spirally wound about a tube 13; the coupling of the tubes 13 forms the permeate flowing pipe; the vessel has an inlet 14 for the feedwater, an outlet 15 for the concentrate and an outlet 16 connected to the permeate pipe. The tubes 13 are joined together in a per se known manner by means of internal sealing interconnections; sealing is obtained for instance by means of O-ring type gaskets.

The conductivity measuring device 17 is permanently inserted into the vessel and consists of a support 18 onto which seven sensors 19 for measuring the conductivity are fixed; the figure exemplifies the case in which the device is inserted into the pipe by means of an element which closes the pipe outside the vessel and which carries the permeate outlet 16, but said insertion may be obtained through an opening made in the permeate pipe; the insertion of device 17 into the pipe must obviously be water-tight, which may be obtained, for example, by means of gaskets or silicone glue. The length of support 18 is at least equal to that of the permeate pipe and its section is preferably not larger than 25% the section of such a pipe. Sensors 19 are fixed onto support 18 so that when this is installed they are positioned approximately at mid length of each module and between two next modules, i.e. in optimal positions for immediately detecting increases of salinity of the water inside the pipe, for example due to the breakage of a membrane or a gasket, respectively.

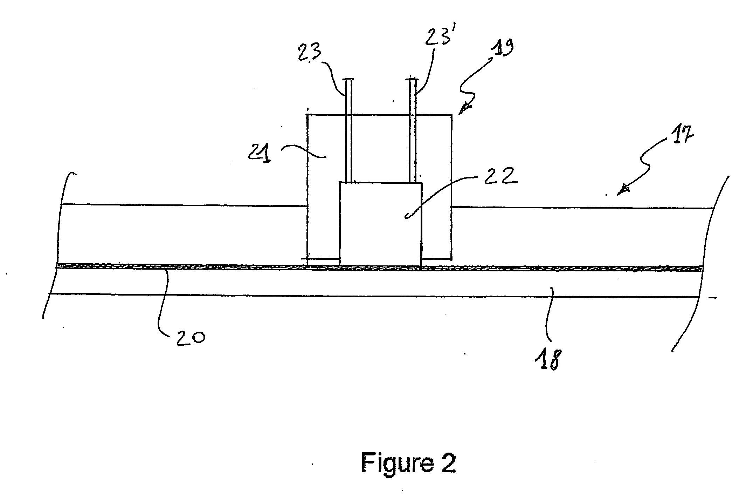

Figure 2 shows the construction of device 17 at a sensor 19 in greater detail. The sensor 19 is inserted into a seat (not shown) of support 18; a communication bus 20, of type well known in the field, is immersed in the material of support 18; the bus may communicate with the outside by means of a common USB output. The sensor 19 is formed by a body 21 in which a circuit logic 22 is inserted (typically a microchip) adapted to connect the electrodes to the bus, connected to two electrodes 23 and 23', electrically facing the outside of the body 21 on the side exposed to the permeate, between which the conductivity of the aqueous solution which flows in the pipe is measured. The sensor 19 is sealed inside the seat obtained in the support 18, for example by means of silicone rubber, to avoid the water present in the permeate pipe from coming into contact with the microchip 22, the bus 20 or other possible parts of the electronic circuit of the device.

The two electrodes are voltage powered by means of the bus: specifically, they may be separately powered with a procedure which addresses them sequentially by means of the logic present in the sensor 19, which then sends to the bus, to the measuring apparatus, the electric conductivity value measured as the ratio between the current flowing across the electrodes and the power voltage. The read electric conductivity values, in combination with the identifiers of the corresponding sensors to which they belong and with the measuring instant, are stored in the measuring apparatus.

Each sensor is driven by a microprocessor which generates sinusoidal waves and detects the current signal. The microprocessor is also used as an operational element and/or current/voltage converter. The reading circuit elements are cylindrical stainless steel probes or inter-digital type structures having a planar configuration or other configurations available on the market. A temperature measuring probe is integrated in the circuit part, which probe is also used for normalizing the specific conductivity readings to the standard reference of 25 °C.

The surfaces of device 17 exposed to the permeate must be made of materials which resist the chemical attack of the permeate itself, and preferably even of the feedwater which may enter the pipe upon a brakeage of some parts of the reverse osmosis modules. Support 18 is made with an electrically insulating and permeate-resistant material; preferably, said material is also feedwater-resistant, so that the device may resist and be reused even after a salty water ingress in the permeate pipe. Support 18 may be made of ceramics or glass or preferably of polymeric materials, e.g. epoxy resins, fiberglass, melamine or polyurethane materials having a barrier-effect.

The material of the body 21 too must be electrically insulating and have the same chemical resistance features as the support 18, and will be preferably made of the same material as said support.

The electrodes 23 and 23' may be cylindrical or shaped as parallel flat strips or have more complex shapes; for example, may be shaped as two three-dimensional bodies in reciprocal, geometric relationship, named "inter-digital", a well-known shape which is widely used for constructing electric sensors because it allows to obtain a high development of the active measuring surface in a small space. The electrodes may be either entirely made of conducting material or may be formed by an inert support material (preferably ceramics or glass) coated with a thin layer of a material suitable for measurement purposes and having the aforesaid chemical resistance features.

The preferable materials for constructing the electrodes 23 and 23' are stainless steel, if they are entirely formed by conducting material, or platinized platinum or gold, if the conducting material is only a thin layer on an inert supporting material. The size of the electrodes and their geometric relationship may greatly vary; preferably, the surface of each electrode facing the opposite electrode is in the range of about 10 mm² - 1 cm², and the distance between the two electrodes is in the range of about 1 mm - 1 cm; if the electrodes are made of inert material coated with a layer of conducting material, preferably said layer has thicknesses in the range of about 1 - 500 µm.

In an alternative embodiment, device 17 may be integrated in the wall of the tube 13 which forms the permeate pipe, for example by embedding bus 20, microchips 22 and electrodes 23 and 23' directly into the material which forms said tube 13 during the production thereof. This form leads to a more complex construction as compared to the discrete form of device 17, because the permeate pipe results to be formed by coupling several parts and the continuity of the above-described bus needs to be ensured at the joining points between the various modules; various advantages are however obtained in this manner, e.g. the internal section of the pipe is not reduced and the insertion of the device into the vessel is considerably simplified, because it is not required practicing water-tight holes in the wall of the permeate pipe or in an element associated thereto.

Further to the sensors for measuring the electric conductivity, the device of the invention may carry gauges for other magnitudes, for example one or more pressure transducers for detecting the load losses between different points of the vessel; this measurement is also interesting for purification system operators because, when appropriately interpreted, it may provide information on the formation of obstructions to the correct water flow in the overall system (e.g. obstructions due to the formation of lime scale deposits in different parts of the system). In the case of pressure drop measurement between two different points inside the vessel, the construction of the device integrated in the wall of tube 13 is particularly interesting because it allows to simply have pressure measurement sensors both inside the permeate pipe and in the chamber of the vessel in which the feedwater is present; monitoring the pressure drop between these two parts provides information about the ageing state of the membranes.

The invention relates to an integrated system which uses vessels containing the device 17 for continuously monitoring the quality of the permeate produced by a reverse osmosis system.

The several devices 17 of all the vessels of the system are connected to a measuring apparatus (not shown in the drawings).

The measuring apparatus uses information on the gathered measurements stored therein for monitoring the operation of the system, as described hereinafter.

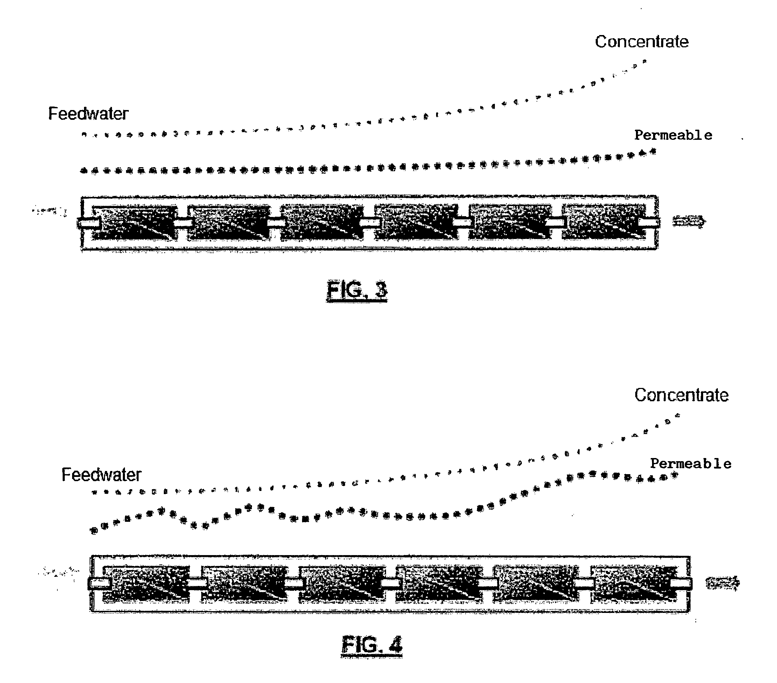

Refer to Figure 3. By reading several points in each vessel, as indeed the instrument allows, it is possible to plot a curve of the electric conductivity according to the longitudinal coordinate of the vessel. Indeed, a vessel is assumed to be completely similar to any reactor known with the acronym PFR (*plug flow reactor*), in which a direction denotes the advancement of the chemical separation and/or reaction in progress.

Figure 4 indeed shows a typical conductivity profile. As shown, there are two data series: a first series generated by the conductivity values which may be detected along the vessel, between the feedwater side and the concentrate side; a second series generated by the conductivity values which may be detected along the permeate tube.

The measurement of the values, the analysis of the first and second derivatives, the study of the passage of salts and the mass balances in each point allow to identify information related to the performance state of each point inside the vessel, as described more in detail below.

The profiles shown in Figure 3 denote a regular operation of the system, being the conductivity weakly increasing in a monotone sense from the feedwater inlet side to outlet side, thus respecting the projections which may be obtained by means of per se known simulation procedures.

We will now consider the profiles shown in Figure 4. While the feedwater and concentrate profile is not subjected to important variations, the conductivity profile of the permeate has an irregular pattern which implies the immediate consideration of the potential deterioration of the general performance of the vessel.

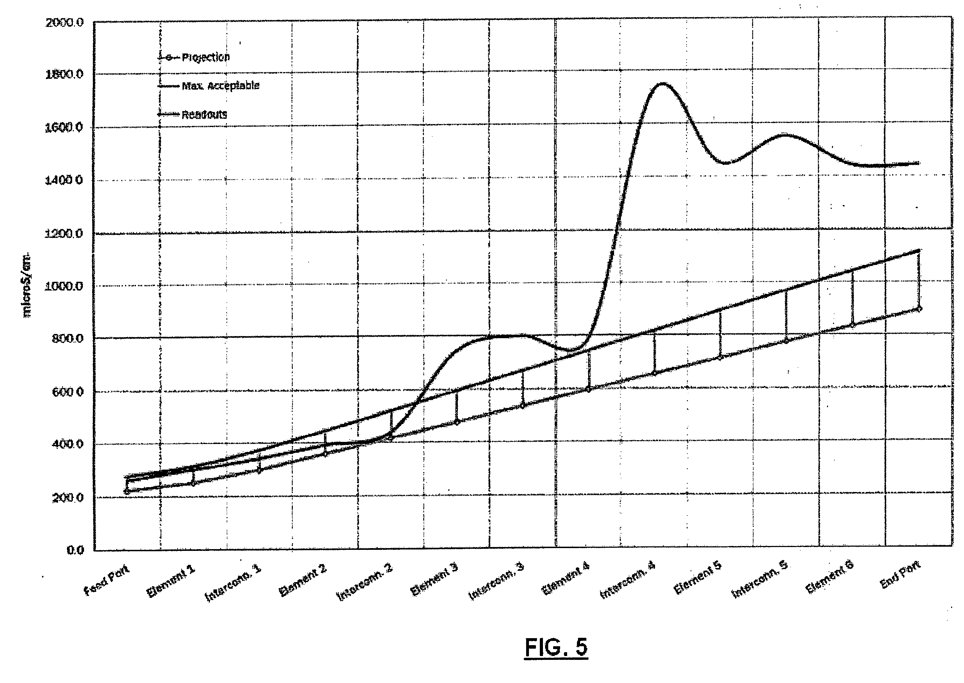

Consider now Figure 5 which depicts the curve symbolically shown in Figure 4, but for an actual case.

As it may be seen, the collection of the information from the vessel at the various reading points carried out by the instrument denotes a profile that is highly irregular and partially beyond the allowed limits, indicated in figure 5 by the band between two limit lines of linear progression. The points at which the reading was carried out are shown on the abscissa axis.

System operation is analyzed by interpreting the collected data using a software procedure, which takes a series of parameters into account, such as matter balances, membrane rejection, pressure differentials, membrane age, temperature, normalized chemical-physical considerations and more, at least partially pre-stored and arising from experimentation and experience.

Algorithms are used which allow to identify which elements are not properly working by displaying on a terminal monitor and to discriminate between membranes which are not working and interconnections which are not sealed. Therefore the complex operations and long interpretations, which would cause the above-mentioned drawbacks which have not been solved until today, are not required.

The use of the multiple-sensor measuring instrument supplies data directly to the software which then interpolates the information in real time thus providing a continuous, systematic analysis carried out by automatic instruments, thus eliminating the subjective interpretation of operators and experts which admits errors and inaccuracies, further to much longer processing times. In this manner, an increase of salinity in the water inside said pipe, upon a breakage occurred in one of the modules, may be immediately detected and the critical vessel may thus be isolated from the system.

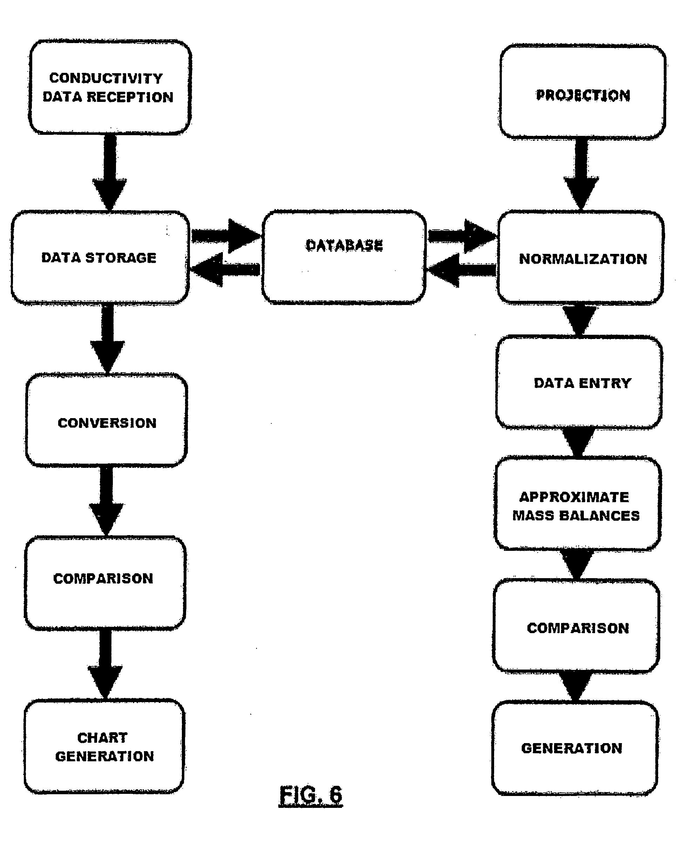

Figure 6 describes an example of the operative flow chart of the software which implements the method object of the invention, by analyzing the system operation.

The data detected by the various sensors of the measuring device and stored in a local database (DATA STORAGE) are read during a step of CONDUCTIVITY DATA RECEPTION for each measured vessel.

Furthermore, the local database (DATABASE) contains pre-loaded data of the typical chemical-physical magnitudes of the vessel.

During a step of CONVERSION, the electric conductivity measurements are converted into concentration values of salts dissolved in water, also using the data stored in the DATABASE.

During the following step of COMPARISON, the converted data thus obtained are compared with the simulation data of the correct vessel behaviour to generate a graph of the type shown in figure 5 during the step of CHART GENERATION.

Parallelly, during a step of PROJECTION, the actual behaviour of the membranes of the vessel is simulated by applying ideal solutions, obtaining reference data, such as for example the two limit lines of linear progression mentioned above.

During the step of NORMALIZATION, normalized data are obtained as compared to the data of the PROJECTION step and to the data from the actual measurements carried out on the membranes, stored in the DATABASE, e.g. making them independent from time and temperature conditions. The normalized data are stored in the DATABASE and used during the above step of COMPARISON.

In a two-way manner, the normalized data are used during the steps of DATA ENTRY, APPROXIMATE MASS BALANCES and COMPARISON to identify the actual points in the vessel in which abnormal behaviours are found and which thus require membrane repairing and/or replacing interventions.

The procedure thus performs detections, such as the measurement of the values, the analysis of the first and second derivates, the study of the passage of salts and the mass balances on each point, also taking the pre-loaded parameters of the membranes into account, such as matter balances, rejection, pressure differentials, age, temperature, normalized chemical-physical considerations mentioned above, which allow to identify information related to the performance state of each point inside the vessel.

During the step of GENERATION using the calculated values, a synoptic image is displayed on the terminal, which image is adapted to identify which elements are not properly working and to discriminate between membranes which are not working and interconnections which are not sealing.

The present invention may be advantageously implemented by means of a computer program which comprises encoding means for implementing the steps of the method, when this program is run on a computer. Therefore the scope of protection is intended to be extended to said computer program and also to computer readable means which include a recorded message, said computer readable means including program encoding means for implementing the steps of the method, when said program is run on a computer.

From the description above, a person skilled in the art will be able to implement the object of the invention without introducing further constructive details.

## Claims

1. A water treating system consisting of a plurality of vessels, each vessel (10) containing at least one filtering module (11), a permeate pipe and a device for monitoring the operation of the vessel, **characterized by** the fact that said device comprises at least 2n+1 electrical conductivity sensors (19), wherein n is the number of filtering modules present in said vessel, positioned at different points along the longitudinal coordinate of the vessel approximately at mid length of each of said modules and between one of said modules and the next.

2. A water treating system according to claim 1, wherein said device (17) includes a support (18) on which said 2n+1 sensors are fixed.

3. A water treating system according to claim 2, wherein the length of said support is at least equal to that of the permeate pipe and its section is preferably not larger than 25% the section of such a pipe.

4. A water treating system according to claims 2 or 3, wherein a bus (20) is immersed in the material of said support for electrically powering said sensors and communicating outside the vessel the measurement carried out by said sensors.

5. A water treating system according to anyone of the preceding claims, wherein said filtering module is a reverse osmosis module.

6. A water treating system according to anyone of the preceding claims, wherein the surfaces of said device exposed to the permeate are made of materials resistant to the chemical attack of the permeate itself.

7. A water treating system according to claim 6, wherein said surfaces are made of materials resistant to the chemical attack of the water to be treated in the system.

8. A water treating system according to anyone of the preceding claims, wherein said sensors are formed by a body (21) in which are inserted two electrodes (23, 23') and a circuit logic (22) adapted to connect the electrodes to a serial bus (20), and said electrodes are electrically facing the outside of said body on the side exposed to the permeate.

9. A water treating system according to claim 8, wherein said support and said body, independently from one another, are made of a material chosen among ceramics, glass or polymeric materials.

10. A water treating system according to claim 9, wherein said polymeric materials are chosen from epoxy resins, fiberglass, melamine or polyurethane materials having a barrier-effect.

11. A water treating system according to claim 1, in which said device is integrated in the wall of the tube which forms the permeate pipe.

12. A water treating system according to claim 1, in which each vessel further includes at least a sensor of at least a second physical parameter.

13. A water treating system according to claim 12, wherein said physical parameter is pressure.

14. A system for the treatment of water according to claim 1 in which the vessels are connected in parallel to each other.

15. A method for monitoring the operation of a water treating system according to claim 1, including the steps of:
• reading and storing the real values of electrical conductivity, which values are detected by means of said sensors;
• comparing said detected real values with simulated, pre-stored reference values to obtain real behaviour curves of each vessel;
• identifying the actual points in the vessel in which abnormal behaviours are found, by means of detections, such as the measurement of values, the analysis of first and second derivates, the study of the passage of salts and the mass balances on each point, taking the pre-stored, simulated reference values into account, such as the matter balances, the rejection, the pressure differentials, the age, the temperature and the normalized chemical-physical considerations.

16. A computer program including program encoding means adapted to implement the steps of claim 15, when said program is run on a computer.

17. Computer readable means comprising a recorded program, said computer readable means comprising program encoding means adapted to implement the steps in claim 15, when said program is run on a computer.

## Patentansprüche

1. Wasserbehandlungssystem, welches aus mehreren Behältern besteht, von denen jeder Behälter (10) mindestens einen Filtrationsmodul (11), ein Permeatrohr und eine Vorrichtung zur Überwachung der Funktionsweise des Behälters enthält, **dadurch gekennzeichnet, dass** die genannte Vorrichtung mindestens 2n + 1 auf der elektrischen Leitfähigkeit beruhende Sensoren (19) umfasst, die an verschiedenen Stellen längs der Längskoordinate des Behälters annähernd auf der halben Länge eines jeden der genannten Module und zwischen den einzelnen Modulen angeordnet sind, wobei n die Anzahl der in dem Behälter vorhandenen Filtrationsmodule ist.

2. Wasserbehandlungssystem nach Anspruch 1, bei welchem die genannte Vorrichtung (17) eine Halterung (18) enthält, an welcher die genannten 2n + 1 Sensoren befestigt sind.

3. Wasserbehandlungssystem nach Anspruch 2, bei welchem die Länge der genannten Halterung mindestens gleich der Länge des Permeatrohres ist und ihr Querschnitt vorzugsweise nicht größer als 25 % des Querschnittes eines solchen Rohres ist.

4. Wasserbehandlungssystem nach den Ansprüchen 2 oder 3, bei welchem ein Bus (20) in das Material der genannten Halterung eingelassen ist, um die genannten Sensoren mit Elektroenergie zu versorgen und die Ergebnisse der von den genannten Sensoren durchgeführten Messungen aus dem Behälter nach außen zu übertragen.

5. Wasserbehandlungssystem nach irgend einem der vorangehenden Ansprüche, bei welchem der genannte Filtrationsmodul ein nach der Umkehrosmose arbeitender Modul ist.

6. Wasserbehandlungssystem nach irgend einem der vorangehenden Ansprüche, bei welchem die Oberflächen der genannten Vorrichtung, die dem Permeat exponiert sind, aus Materialien gefertigt sind, welche gegenüber dem chemischen Angriff des Permeats selbst beständig sind.

7. Wasserbehandlungssystem nach Anspruch 6, bei welchem die genannten Oberflächen aus Materialien gefertigt sind, welche gegenüber dem chemischen Angriff des Wassers, welches in dem System behandelt werden soll, beständig sind.

8. Wasserbehandlungssystem nach irgend einem der vorangehenden Ansprüche, bei welchem die genannten Sensoren durch einen Körper (21) gebildet sind, in welchen zwei Elektroden (23, 23') und eine Schaltungslogik (22) eingebettet sind, welche so ausgelegt sind, dass sie den Anschluss der Elektroden an einen seriellen Bus (20) gewährleisten und die genannten Elektroden am genannten Körper auf der dem Permeat exponierten Seite elektrisch nach außen treten.

9. Wasserbehandlungssystem nach Anspruch 8, bei welchem die genannte Halterung und der genannte Körper unabhängig voneinander aus einem Material gefertigt sind, welches unter Keramiken, Gläsern oder Polymeren ausgewählt wird.

10. Wasserbehandlungssystem nach Anspruch 9 bei welchem die genannten Polymere gewählt werden aus den Materialien Epoxidharzen, Glasfasermaterialien, Melaminharzen oder Polyurethanmaterialien, welche eine Barrierewirkung zeigen.

11. Wasserbehandlungssystem nach Anspruch 1, bei welchem die genannte Vorrichtung in die Wand des Rohres integriert ist, welches das Permeatrohr bildet.

12. Wasserbehandlungssystem nach Anspruch 1, bei welchem jeder Behälter außerdem mindestens einen Sensor für einen zweiten physikalischen Parameter enthält.

13. Wasserbehandlungssystem nach Anspruch 12, bei welchem der zweite physikalische Parameter der Druck ist.

14. Wasserbehandlungssystem nach Anspruch 1, bei welchem die Behälter parallel miteinander verbunden sind.

15. Verfahren zur Überwachung der Funktion eines Wasserbehandlungssystems nach Anspruch 1, wobei dieses Verfahren die folgenden Schritte umfasst:
• Ablesen und Speichern der Istwerte der elektrischen Leitfähigkeit, also derjenigen Werte, welche mit Hilfe der genannten Sensoren erfasst werden;
• Vergleichen der genannten erfassten Istwerte mit bereits gespeicherten modellierten Bezugswerten, um von jedem Behälter Kurven über das tatsächliche Verhalten zu erhalten;
• Identifizierung der tatsächlichen Stellen in dem Behälter, wo ein abnormes Verhalten mit Hilfe der Nachweismethoden vorgefunden wird wie beispielsweise mit Hilfe der Messung der Werte, der Analyse der ersten und der zweiten Ableitung, der Untersuchung über den Durchtritt von Salzen und der Massebilanz an jeder Stelle unter Berücksichtigung der bereits gespeicherten modellierten Werte wie beispielsweise derjenigen über die Stoffbilanzen, die Rückstände, die Differentialdrücke, das Alter, die Temperatur und die genormten chemischphysikalischen Erwägungen.

16. Computerprogramm unter Einschluss von Mitteln zur Programmierung, welche dergestalt ausgelegt sind, dass die Schritte von Anspruch 15 implementiert werden, wenn das genannte Programm auf einem Computer läuft.

17. Maschinenlesbare Mittel, welche ein aufgezeichnetes Programm umfassen, wobei die genannten maschinenlesbaren Mittel Programmiermittel umfassen, die dergestalt ausgelegt sind, dass die Schritte im Anspruch 15 implementiert werden, wenn das genannte Programm auf einem Computer läuft.

## Revendications

1. Système de traitement d'eau consistant en une pluralité de cuves, chaque cuve (10) contenant au moins un module filtrant (11), un tuyau de filtrage et un dispositif pour surveiller le fonctionnement de la cuve, **caractérisé par le fait que** ledit dispositif comprend au moins 2n+1 capteurs de conductivité électrique (19), où n est le nombre de modules filtrants présents dans ladite cuve, positionnés à des points différents le long de la coordonnée longitudinale de la cuve approximativement à mi-longueur de chacun desdits modules et entre un desdits modules et le suivant.

2. Système de traitement d'eau selon la revendication 1, dans lequel ledit dispositif (17) comprend un support (18) sur lequel lesdits 2n+1 capteurs sont fixés.

3. Système de traitement d'eau selon la revendication 2, dans lequel la longueur dudit support est au moins égale à celle du tuyau de filtrage et de préférence sa section ne représente pas plus que 25% de la section d'un tel tuyau.

4. Système de traitement d'eau selon les revendications 2 ou 3, dans lequel un bus (20) est immergé dans le matériau dudit support pour alimenter électriquement lesdits capteurs et pour communiquer vers l'extérieur de la cuve la mesure effectuée par lesdits capteurs.

5. Système de traitement d'eau selon l'une quelconque des revendications précédentes, dans lequel ledit module filtrant est un module d'osmose inverse.

6. Système de traitement d'eau selon l'une quelconque des revendications précédentes, dans lequel les surfaces dudit dispositif exposées au perméat sont réalisées en des matériaux résistant à une attaque chimique du perméat lui-même.

7. Système de traitement d'eau selon la revendication 6, dans lequel lesdites surfaces sont réalisées en des matériaux résistant à l'attache chimique de l'eau à traiter dans le système.

8. Système de traitement d'eau selon l'une quelconque des revendications précédentes, dans lequel lesdits capteurs sont formés par un corps (21) dans lequel sont insérées deux électrodes (23, 23') et une logique de circuit (22) apte à connecter les électrodes à un bus série (20), et lesdites électrodes font électriquement face vers l'extérieur dudit corps sur le côté exposé au perméat.

9. Système de traitement d'eau selon la revendication 8, dans lequel ledit support et ledit corps, indépendamment l'un de l'autre, sont réalisés en un matériau sélectionné parmi des céramiques, le verre ou des matériaux polymères.

10. Système de traitement d'eau selon la revendication 9, dans lequel lesdits matériaux polymères sont sélectionnés parmi des résines époxy, la fibre de verre, de matériaux de mélamine ou de polyuréthane ayant un effet de barrière.

11. Système de traitement d'eau selon la revendication 1, dans lequel ledit dispositif est intégré dans la paroi du tube qui forme le tuyau de filtrage.

12. Système de traitement d'eau selon la revendication 1, dans lequel chaque cuve comprend en outre au moins un capteur d'au moins un deuxième paramètre physique.

13. Système de traitement d'eau selon la revendication 12, dans lequel ledit paramètre physique est la pression.

14. Système pour le traitement de l'eau selon la revendication 1, dans lequel les cuves sont reliées en parallèle les unes aux autres.

15. Procédé de surveillance du fonctionnement d'un système de traitement d'eau selon la revendication 1, incluant les étapes de:
• lire et stocker les valeurs réelles de la conductivité électrique, lesdites valeurs étant détectées par lesdits capteurs;
• comparer lesdites valeurs réelles détectées avec des valeurs de référence simulées pré-stockées pour obtenir des courbes de comportement réelles de chaque cuve;
• identifier les points actuels de la cuve dans laquelle des comportements anormaux sont détectés, par des détections, comme la mesure de valeurs, l'analyse de première et deuxième dérivés, l'étude du passage de sels et les équilibres de masse sur chaque point, en prenant en considération les valeurs de référence simulées pré-stockées, comme les équilibres de matières, le rejet, les différences de pression, l'âge, la température et les considérations chimiques-physiques normalisées.

16. Programme informatique incluant un programme codant pour un moyen apte à mettre en oeuvre les étapes de la revendication 15 lorsque ledit programme est exécuté sur un ordinateur.

17. Moyen lisible par ordinateur comprenant un programme enregistré, ledit moyen lisible par ordinateur comprenant un moyen de codage de programme apte à mettre en oeuvre les étapes de la revendication 15 lorsque ledit programme est exécuté sur un ordinateur.
